# EUROPEAN PATENT SPECIFICATION

(11) **EP 4 458 515 B1**
(45) Date of publication and mention of the grant of the patent: **28.01.2026**
(21) Application number: 24169204.5
(22) Date of filing: 09.04.2024
(51) Int. Cl.: B25B 23/14, B25B 23/147, G01B 21/22, G01L 5/24, G06N 20/20

(54) **DETERMINING CORRECTNESS OF ESTIMATED TIGHTENING CLASSES**
BESTIMMUNG DER KORREKTHEIT VON GESCHÄTZTEN FESTZIEHKLASSEN
DÉTERMINATION DE L'EXACTITUDE DE CLASSES DE SERRAGE ESTIMÉES

(30) Priority: 04.05.2023 SE 2330199
(43) Date of publication of application: 06.11.2024
(73) Proprietor: Atlas Copco Industrial Technique AB, 105 23 Stockholm (SE)
(72) Inventor: Tang, Lifei, 131 48 Nacka (SE); Hanus, Wojciech, 124 32 Bandhagen (SE); Axelsson, Toni, 134 53 Gustavsberg (SE); Rystedt, Beata, 11328 Stockholm (SE); Aldenfalk, Staffan, 171 55 Solna (SE); Wilkman, Dennis, 118 21 Stockholm (SE)
(74) Representative: Atlas Copco Industrial Technique AB

(56) References cited:
- EP-A1- 3 623 108
- US-A1- 2022 395 941

## Description

### TECHNICAL FIELD

The present disclosure relates to a method for determining correctness of tightening classes estimated by a trained multi-label machine learning (ML) model of a tightening operation performed by a tightening tool, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

### BACKGROUND

During tightening of a fastener such as a bolt or a screw using a tightening tool, there are several undesired tightening results that may occur for the bolt or screw being tightened.

Analysing sensor data from the tightening tool provides valuable insight as regards the tightening result. Analytical models may be developed to determine the tightening result based on sensor data from the tightening tool.

However, whether or not a tightening result is correct may be difficult to determine by a human operator or a machine, and is further burdensome and time consuming.

To this end, machine-learning (ML) may be used to analyse the tightening results. However, a trained ML model may not always be a good fit for a particular application, which may be difficult for a human operator or a machine to detect.

EP 3 623 108 discloses a method and apparatus for detecting tightening quality of a tightening tool and a storage medium. This document discloses a method according to the preamble of claim 1 and a device according to the preamble of claim 14. The method for detecting tightening quality of a tightening tool comprises obtaining tightening data generated during a tightening process of the tightening tool, and generating a tightening curve representing change of the tightening data over time, and performing pattern recognition on the tightening curve to classify the tightening curve, wherein a different category of the tightening curve corresponds to a different category of tightening quality of the tightening tool.

### SUMMARY

One objective is to solve, or at least mitigate, this problem in the art and thus to provide a method of determining correctness of tightening classes estimated by a trained multi-label ML model for a tightening operation.

In a first aspect, the invention provides a method, according to claim 1, for determining correctness of tightening classes estimated by a trained multi-label ML model of a tightening operation performed by a tightening tool. The method comprises acquiring at least one tightening class estimated by the trained ML model in response to at least one set of observed torque and angle values being supplied to the ML model for a fastener having been tightened by the tightening tool, the tightening class identifying a characteristic of the tightening having been applied to the fastener, evaluating if there is an indication that the acquired at least one tightening class is incorrect in terms of the characteristics of the tightening having been applied to the fastener, and if so providing an alert indicating that the estimation of the at least one tightening class by the ML model is incorrect.

In a second aspect, the invention provides a device, according to claim 14, configured to determine correctness of tightening classes estimated by a trained multi-label ML model of a tightening operation performed by a tightening tool. The device comprises a processing unit operative to cause the device to acquire at least one tightening class estimated by the trained ML model in response to at least one set of observed torque and angle values being supplied to the ML model for a fastener having been tightened by the tightening tool, the tightening class identifying a characteristic of the tightening having been applied to the fastener, evaluate if there is an indication that the acquired at least one tightening class is incorrect in terms of the characteristics of the tightening having been applied to the fastener, and if so to provide an alert indicating that the estimation of the at least one tightening class by the ML model is incorrect.

It may in practice occur that tightening classes estimated by a trained ML model is incorrect. For instance, it may be that the trained ML model for some reason is not a good fit for a given individual tool, or that the trained ML model performs poorly for a tightening tool of one type but performs well for another similar type of tightening tool.

In another example, it may be envisaged that the ML model is sensitive to a given tightening application or environment; for instance, it may be envisaged that the trained ML model performs highly accurate tightening class estimations for small-scale bolts but less accurate estimations not for large-scale bolts, or that the trained ML model fits well with one type of joint to be tightened but not with another type, and so on.

Advantageously, with embodiments disclosed herein, the tightening class estimations of the trained ML model is evaluated for a tightening operation during which the trained ML model is applied to determine whether or not the trained ML model indeed is a good fit for this particular scenario, i.e. tool, application, bolt, joint, environment, etc. if not, the trained ML model being evaluated should preferably not be applied in this particular case but rather a trained ML model better adapted to this particular scenario should be utilized. In other words, if the evaluation shows that one or more estimations of the ML model are indicated to be incorrect, an alert should be provided.

In an embodiment, if the evaluation indicates that the estimation of the acquired at least one tightening class is correct, an alert is provided indicating that the estimation of the at least one tightening class by the ML model indeed is correct.

In an embodiment, the alert indicating that the estimation of the at least one tightening class by the ML model is incorrect is provided if a number of sets of observed torque and angle values for which the at least one estimated tightening class is evaluated to be incorrect is determined to exceed a predetermined threshold value.

In an embodiment, the alert is provided if further a predetermined number of sets of observed torque and angle values is determined (S202a) to have been evaluated.

In an embodiment, a current version of the trained ML model is changed for a previous version of the trained ML model if the exceeding of the predetermined threshold value indicates that the previous version of the trained ML model performs better estimations.

In an embodiment, the alert is provided to an operator of the tightening tool, to the tightening tool itself, to a supervision control room or to a remote cloud function.

In an embodiment, the tightening tool provides an audible and/or visual alert to the operator of the tool.

In an embodiment, the machine learning is based on one or more of neural networks, random forest-based classification and regression analysis.

In an embodiment, the acquiring of at least one tightening class estimated by the trained ML model in response to at least one set of observed torque and angle values being supplied to the ML model comprises acquiring at least two tightening classes, and the evaluating if there is an indication that the acquired at least one tightening class is incorrect comprises evaluating if there is a conflict between the acquired at least two tightening classes in terms of the characteristics of the tightening having been applied to the fastener; and if so the alert is provided indicating that the estimation of at least one of the tightening classes by the ML model is incorrect.

In an embodiment, the evaluating if there is a conflict between the acquired at least two tightening classes comprises determining that the acquired at least two tightening classes identify characteristics which are not expected to occur during the same tightening operation.

In an embodiment, the evaluating if there is an indication that the acquired at least one tightening class is incorrect comprises determining that one or more expected further tightening classes are absent for the acquired at least one tightening class.

In an embodiment, the evaluating if there is an indication that the acquired at least one tightening class is incorrect comprises determining that the acquired at least one tightening class was absent in a training data set utilized for training the ML model.

In a third aspect, a computer program according to claim 12 is provided comprising computer-executable instructions for causing the device to perform steps recited in the method of the first aspect when the computer-executable instructions are executed on a processing unit included in the device.

In a fourth aspect, a computer program product according to claim 13 is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a tightening tool configured to apply a torque to a fastener, in which tool embodiments may be implemented;
Figures 2a-d illustrates different types of undesired tightening operations which may be performed by the tool during a tightening program;
Figure 3 illustrates training of a machine-learning model;
Figure 4 illustrates utilizing the trained ML model for estimation tightening classes;
Figure 5 shows a flowchart illustrating a method for determining a tightening class of a tightening operation performed by the tightening tool;
Figure 6 illustrates evaluation of tightening classes provided by a trained ML model according to an embodiment;
Figure 7 shows a flowchart illustrating a method of performing the evaluation of tightening classes provided by the trained ML model of Figure 6 according to an embodiment;
Figure 8 illustrates evaluation of tightening classes provided by a trained ML model according to another embodiment; and
Figure 9 shows a flowchart illustrating a method of performing the evaluation of tightening classes provided by the trained ML model of Figure 8 according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

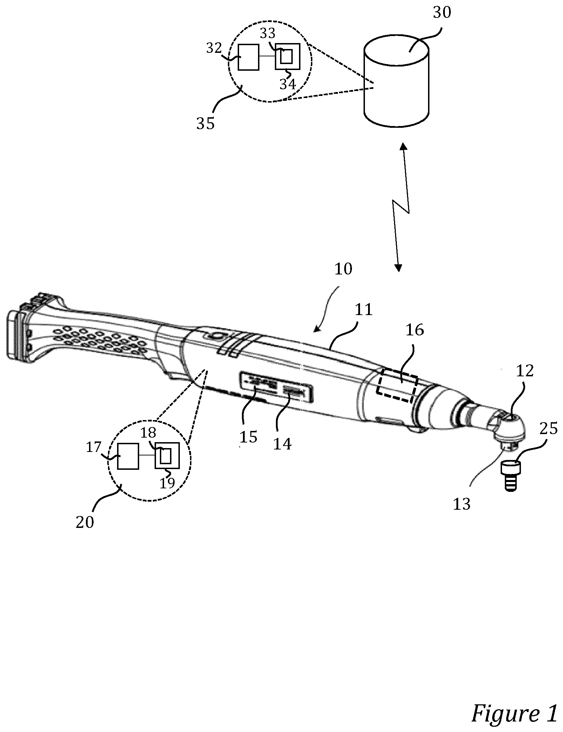

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be arranged with communicating capability in the form of a radio transmitter/receiver 16 for wirelessly transmitting operational data, such as applied torque, to a remotely located controller such as a cloud server 30 or a device such as a server executing on the premises. Alternatively, communication between the tool 10 and the controller 30 may be undertaken via a wired connection.

Thus, the tool 10 may for instance communicate measured operational data to the controller 30 for further evaluation while the controller 30 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18. 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 is in communicative connection with one or more sensors (not shown) for measuring the torque applied to the bolt 25 and a rotation angle of the output shaft 13 of the tightening tool 10 upon applying the torque.

Now upon an operator using the tightening tool 10 to tighten a fastener such as the bolt 25, it is important that the tightening operation is performed correctly for the tightened bolt 25 to maintain its fastening durability. If not, there is a risk that the tightening becomes inferior which in worst case may cause the bolt 25 to unscrew. Thus, it is crucial that the bolt 25 is correctly tightened and if not, it is desirable to attain an indication accordingly such that the operator may utilize the tool 10 to correctly retighten the bolt 25. Commonly, an incorrect tightening is referred to as a not ok (NOK) tightening, while a correct tightening conversely is referred to as OK.

One such tightening operation performed by the tool 10 (and its human operator) is referred to as disengagement. During disengagement, the torque values suddenly drop to zero before completion of the tightening program being performed.

If for instance the torque values suddenly drop to zero before completion of the tightening, disengagement between the output shaft 13 (and socket) and the bolt 25 may have occurred. This may be caused by operator behaviour, worn out tool parts and/or fasteners, incorrect tool programming, etc.

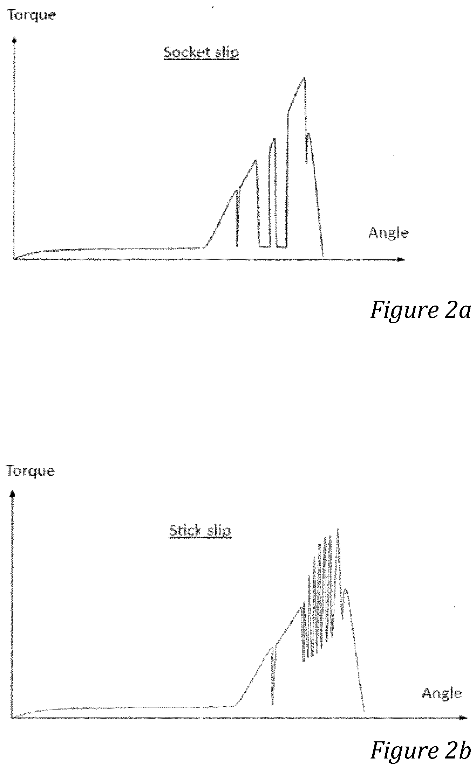

Figures 2a-d illustrate a plurality of undesired tightening operations being performed by the tool 10. The combination of the torque and angle values for a tightening program being performed is sometimes referred to as a *trace.*

Figure 2a illustrates a particular type of tightening operation commonly referred to as socket slip, which may occur when the torque value increases and decreases at periodical angle intervals.

Figure 2b illustrates another particular type of tightening operation commonly referred to as stick slip, which may occur when the torque values fluctuate at a high frequency.

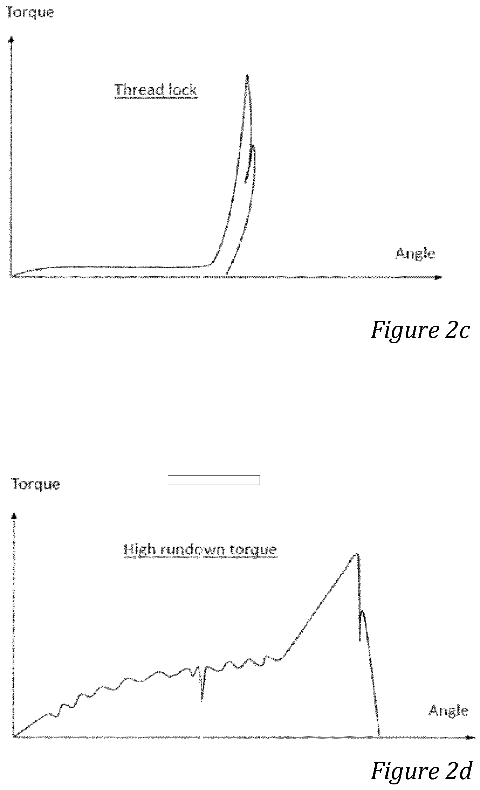

Figure 2c illustrates another particular type of tightening operation; a so-called thread lock which may occur when the applied torque reaches a target torque immediately after a rundown phase. This is typically caused by the threads of the bolt 25 that is tightened suddenly locking, for example because of the bolt 25 being entered into the thread at an angle or if the dimensions were not correct.

Finally, Figure 2d illustrates a further particular type of tightening operation referred to as high rundown torque which may occur when the applied torque reaches a target torque during a rundown phase. This is typically caused by friction in the thread of the bolt 25 being higher than normal, for example because of the bolt 25 having an incorrect dimension, wrong thread coating or that the bolt 25 was slanted upon entering the thread.

As is understood, these are examples of incorrect tightening operations being performed by the tool 10, which preferably should be avoided. However, should they still occur, it is desirable that an operator or some supervision function is informed thereof.

Hence, in an embodiment, a trained machine-learning (ML) model is used to determine from acquired torque and angle values whether or not an incorrect tightening operation has been performed and if so, which particular type of tightening operation has been performed, i.e. whether it is one of the above-mentioned "disengage", "socket slip", "stick slip", "thread lock" and "high rundown torque" (or any other identified tightening operation. In practice, there are numerous different types other than those illustrates in Figures 2a-d).

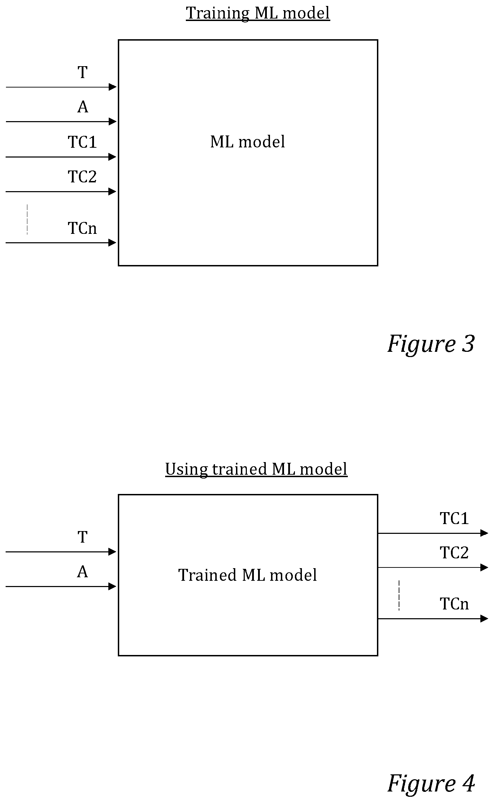

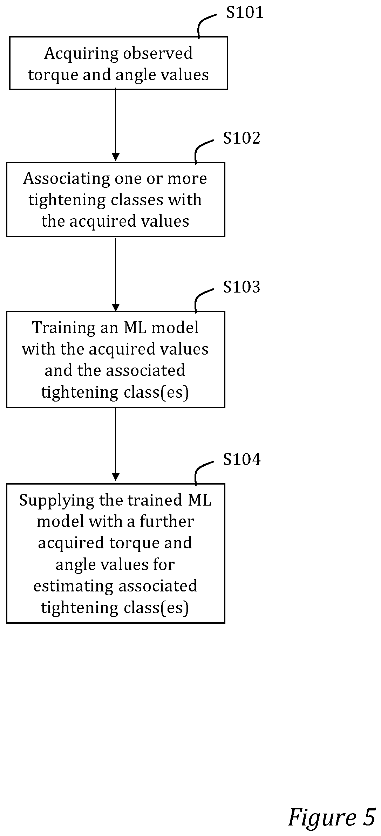

Figure 3 illustrates the training of the ML model according to an example, while Figure 4 illustrates utilizing the trained ML model to estimate a tightening class for a supplied set of torque and angle values during a tightening operation. Reference is further made to Figure 5 showing a flowchart illustrating a method for determining a tightening class of a tightening operation performed by the tightening tool 10.

Thus, during a training phase, one or more sets of observed torque values T and angle values A for bolts 25 having been tightened by the tightening tool 10 is acquired in step S101. Thus, these are the torque and angle values previously illustrated with reference to the graphs of Figures 2a-d.

For instance, each set may comprise, say, a hundred torque values and corresponding angle values acquired by the processing unit 17 upon the tightening tool 10 performing a tightening program. Further, hundreds or even thousands of sets of torque and angle values may be supplied to the ML model for thorough training.

Any acquired torque and angle values may be stored locally in the memory 19 and/or communicated wirelessly via the radio transmitter 16 to the remotely located cloud server 30 or other appropriate device separated from the tool 10, such as a server located on the premises.

In step S102, a tightening class TC is associated with each set of acquired torque and angle values. This tightening class thus identifies the type of tightening operation having been applied to the fasteners. As previously exemplified, the tightening class may include "disengage", "socket slip", stick slip", "thread lock" and "high rundown torque", etc., or any other identified type of tightening operation.

In practice, the operator of the tool 10 typically identifies from the acquired sets of torque and angles values with which particular tightening class a set of measured values is to be associated. For instance, if the observed torque values T and angle values A have the appearance of Figure 2b as presented to the operator via the display 14, the operator concludes that the associated tightening class should be "stick slip" and inputs information identifying the tightening class via the interface 15 to the tool 10.

The identified tightening class is supplied to the ML model for training along with the acquired set of torque and angle values in step S103.

This is typically repeated for a large number of sets of observed torque and angle values, and the ML model will thus be effectively trained in step S103 to associate a tightening class TC with each supplied set of torque and angle values T, A.

While a single-label tightening ML model may be utilized where each set of observed torque and angle values T, A is associated to one tightening class TC only ("stick slip", "socket slip", "thread lock", etc., as discussed above) it may also be envisaged that a multi-label tightening ML model is utilized where each set of observed torque and angle values T, A is associated with a plurality of tightening classes TC1, TC2, ..., TCn as illustrated in Figure 3.

As an example, it may be envisaged that each of the above illustrated tightening operation types of Figures 2a-d, i.e. "socket slip", stick slip", "thread lock" and "high rundown torque" is defined utilizing a first tightening class TC1, while a second complementing tightening class TC2 is utilized for indicating an OK/NOK tightening operation.

As is understood, the tightening tool 10 can generally indicate an OK/NOK tightening based on predetermined threshold values, while the ML model also may indicate an OK/NOK tightening based on training data. Thus, the OK/NOK assessment of the tightening tool 10 and the ML model, respectively, may be evaluated wherein the ML model provides a second opinion on the performed tightening operation.

For instance, if the tightening tool 10 itself (i.e. the processing unit 17) indicates a NOK operation while the trained ML model indicates an OK operation - or vice versa - there may be an issue and the operator of the tool may be alerted accordingly.

In another example, it may also be that a trace indicates two different types of tightening operations being performed for one and the same trace. For instance, a trace may constitute *both* a "socket slip" and a "stick slip", in which case (at least) two classes are assigned to the trace; TC1 = "socket slip" and TC2 = "stick slip", to indicate that the trace represents both a socket slip operation and a stick slip operation, and even further classes such as TC3 = "thread lock" should that be applicable. Thus, several exclusive tightening classes may correctly be assigned to the same trace in a multi-label setting.

In another example, there are typically two phases during a tightening operation, a first is the rundown phase where the tool 10 operates at a high speed when the resistance of the joint to be tightened by the bolt 10 is low, and a second end-tightening phase where the tool 10 slows as the torquing up proceeds. It may thus be desirable to assign a first tightening class TC1 to the torque and angle values T, A observed for the initial rundown phase (e,g. "OK/NOK"), and a second tightening class TC2 to the torque and angle values T, A of the final end-tightening phase (e.g. "OK/NOK"), and/or even to specifically indicate the rundown phase with TC1 and the end-tightening phase with TC2 for the same trace.

In addition, a tightening class TC3 may be introduced indicating whether or not the bolt 25 for some reason has been damaged during the tightening operation, and even a tightening class TC4 specifying whether or not there is an indication that a joint to be tightening by the bolt 25 has been damaged. As is understood, numerous tightening classes TC1, TC2, ..., TCn may be associated with a tightening operation.

Thus, as shown in Figure 4, upon a tightening program subsequently being performed by the tool 10, the trained ML model is supplied in step S104 with a further acquired set of observed torque and angle values T, A for the tightening program being performed.

As a result, the trained ML model will advantageously output one or more estimated tightening classes TC1, TC2, ..., TCn for the further set of observed torque and angle values T, A supplied to the trained ML model during the tightening operation, for instance via the display 14 such that the operator can determine whether or not the tightening program is to be re-performed. Hence, the trained ML model will facilitate detection of tightening classes TC from supplied torque and angel values T, A being registered during a tightening operation.

Alternatively, rather than having the control device 20 of the tool 10 performing steps S101-S104, it may be envisaged that torque and angle values T, A are communicated by the tool 10 via transceiver 16 to the cloud server 30 being equipped with a corresponding control device 35 for performing steps S101-S104, which would relieve the processing unit 17 of the tool 10 from computational burden. The cloud server 30 may send information indicating the estimated tightening class to the tool 10 via the transceiver 16, which presents an alert of the tightening class to the operator via the display 14 or audibly via a small speaker included with the tool 10.

In another alternative, the training of the ML model as set out in steps S101-S103 is undertaken by the server 30, which server then supplies the tool 10 with the trained ML model. The tool 10 may then store the trained ML model in the memory 19 and thus locally execute step S104.

It may be envisaged that the cloud server 30 may have access to torque and angle values of a multitude of tightening tools of the same type as the tool 10, thus facilitating training of the ML model with a massive quantity of training data.

However, in practice, it may occur that the tightening classes TC estimated by the trained model is incorrect. For instance, it may be that the trained ML model for some reason is not a good fit for a given individual tool, or that the trained ML model performs poorly for a tightening tool of one type but performs well for another similar type of tightening tool.

In another example, it may be envisaged that the ML model is sensitive to a given tightening application or environment; for instance, it may be envisaged that the trained ML model performs highly accurate tightening class estimations for small-scale bolts but less accurate estimations not for large-scale bolts, or that the trained ML model fits well with one type of joint to be tightened but not with another type, and so on.

In other words, it is desirable that the TC estimations of the trained ML model of Figure 4 can be evaluated for a tightening operation during which the trained ML model is applied to determine whether or not the trained ML model indeed is a good fit for this particular scenario, i.e. tool, application, bolt, joint, environment, etc. if not, the trained ML model being evaluated should preferably not be applied in this particular case but rather a trained ML model better adapted to this particular scenario should be utilized.

For instance, with reference e.g. to the above-given example, any estimated tightening class indicating either of "socket slip", stick slip", "thread lock" and "high rundown torque" as an OK tightening should be considered incorrect.

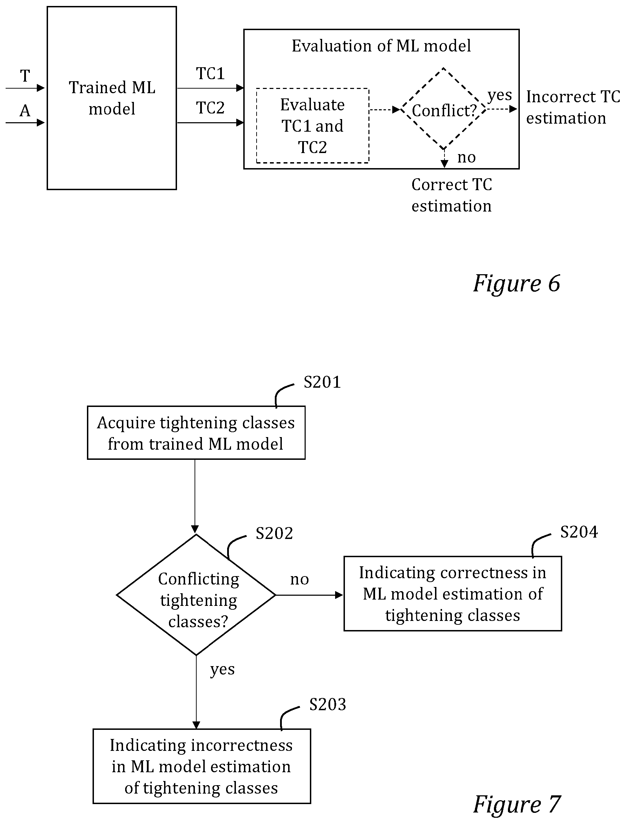

Figure 6 illustrates an embodiment where such ML model evaluation is performed. Assuming in this exemplifying embodiment that the trained ML model estimates and outputs two tightening classes TC1, TC2 for each supplied set of observed torque and angle values T, A. In this example, the tightening classes indicate:
TC1 = "OK tightening", TC2 = "bolt damaged".

However, these are two conflicting tightening classes TC since it can be determined that TC1 and TC2 identify characteristics which are not expected to occur during the same tightening operation.

Figure 7 shows a flowchart illustrating a method of performing the evaluation of Figure 6 according to an embodiment.

The tightening classes TC1, TC2 estimated by the trained ML model are thus supplied to an evaluation module, which may be implemented in the processing unit 17, 32 of the tool 10 itself or the server 30, as previously discussed. It will be assumed in the following that the processing unit 17 of the tool 19 performs the evaluation.

Thus, the processing unit 17 acquires, in step S201, the two tightening classes TC1, TC2 estimated by the trained ML model in response to the observed torque and angle values T, A being supplied to the ML model for the bolt 25 having been tightened by the tool 10. As discussed, each tightening class TC1, TC2 identifies a characteristic of the tightening operation having been performed.

Thereafter, in step S202, the two tightening classes TC1, TC2 are evaluated and if there is a conflict between TC1 and TC2, the processing unit 17 concludes that the tightening class estimation of the ML model is incorrect, since during a normal OK tightening operation, the bolt 25 should not be damaged. The evaluation module will thus in step S203 provide as output an alert indicating that the estimation of TC1 and TC2 is incorrect.

In contrast, should the estimated tightening classes TC1, TC2 which are output from the trained ML model indicate:
TC1 = "NOK tightening", TC2 = "bolt damaged",
the evaluation model would come to the conclusion that no tightening class conflict is present, since it indeed could be expected that a NOK tightening may result in a damaged bolt and thus that the two tightening classes TC1 and 'TC2 are compatible. Optionally, the processing unit 17 provides in step S204 an alert indicating that the estimation of the at least two tightening classes by the ML model is correct.

As is understood, a NOK tightening does not necessarily lead to a damaged bolt (even if that rarely may occur due to e.g. excessive torque being applied); it may rather be that the bolt 25 is damaged since it is defective. However, the opposite is true, i.e. a tightening resulting in a damaged bolt should be indicated to as a NOK tightening.

In an embodiment, it may be that a single estimated tightening class is acquired in S201 and evaluated in S202. If e.g. the acquired estimated tightening class is a tightening class that was not included in a training data set utilized for training the ML model, then it will be concluded that the estimation of the tightening class by the ML model is incorrect. This would also hold true in case multiple estimated tightening classes are acquired and at least one of the acquired tightening classes was not part of the training data. Should the trained ML model not output any tightening class at all, then that may also indicate an error.

In another embodiment, in line with the dual-phase example hereinabove for the tightening operation being performed, assuming that a first tightening class TC1 indicates a rundown phase being performed (TC1 = "rundown phase") while a second tightening class TC2 indicates an end-tightening phase being performed (TC2 = "end-tightening phase") based on a set of observed torque and angle values T, A, and a third tightening class TC3 indicating whether or not the rundown and the end-tightening are adequately performed (TC3 = "OK/NOK"), i.e. that the tighten operation indeed is successful. Thus, for a successful tightening operation to be performed, TC1 and TC2 must be outputted from the trained ML model along with TC3 indicating "OK".

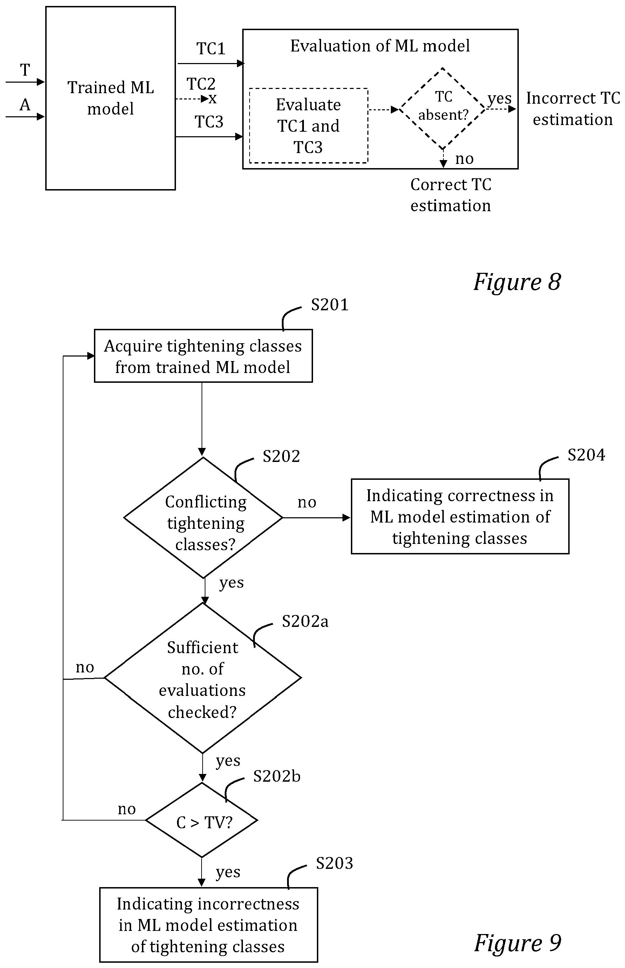

Figure 8 illustrates this embodiment further, wherein it is shown that the trained ML model outputs TC1 and TC3, but not TC2. For instance, based on the supplied torque and angle values T, A, the trained ML model may incorrectly estimate that no end-tightening phase has been performed but that an adequate rundown phase has been performed as indicated by outputting TC1 = "rundown phase" and TC3 = "OK".

Thus, similar to what is illustrated in the previously discussed flowchart of Figure 7, the processing unit 17 acquires, in step S201, the two tightening classes TC1, TC3 estimated by the trained ML model in response to the observed torque and angle values T, A being supplied to the ML model for the bolt 25 having been tightened by the tool 10.

Thereafter, in step S202, the two tightening classes TC1, TC3 are evaluated and if there is a conflict between TC1 and TC3, the processing unit 17 concludes that the tightening class estimation of the ML model is incorrect.

In this particular embodiment, the conflict lies in the fact that TC1 and TC3 is outputted from the trained ML model but not TC2, which indicates incorrectness of the tightening calls estimation since a rundown phase always should be followed by an end-tightening phase (regardless of whether the tightening operations is deemed OK/NOK); if that is not the case, the estimation is likely incorrect. In other words, it is determined that one expected tightening class TC2 is absent among the acquired tightening classes TC1 and TC3.

In another example, if a tightening class is acquired indicating an end-tightening phase, but no rundown tightening class is acquired (i.e. no rundown tightening class is being outputted from the trained ML model), then the estimation is indicated to be incorrect since the end-tightening phase should be preceded by the rundown phase. In other words, the expected rundown tightening class is absent.

The evaluation module will thus in step S203 provide as output an alert indicating that the ML model estimation is incorrect since TC1 and TC3 is outputted but an expected TC2 is absent.

In a further embodiment, with reference to the flowchart of Figure 9, upon performing the evaluation in step S202 and concluding that there indeed is a conflict between the acquired tightening classes (e,g. TC1 = "OK tightening", TC2 = "bolt damaged"), the method proceeds to step S202a where it is determined whether or not a sufficient number of sets of torque and angle values T, A has been evaluated for the assessment to carry statistical weight, say 100 sets.

If not, a further set of torque and angle values T, A are acquired and evaluated in step S202. If in step S202a it eventually is determined that a sufficient number of sets of torque and angle values T, A has been evaluated, it is determined in step S202b whether or not the number C of conflicts having occurred exceeds a threshold value TV, say 20, and if so an alert is provided in step S203 indicating that the ML model incorrectly performs the TC estimations.

For instance, the processing unit 17 of the tool 10 may be preconfigured to provide and alert only if, say, 20% of the total number of evaluated sets of torque and angle values T, A results in a tightening class indicated to be incorrectly estimated.

Thus, assuming that 100 tightening operations are to be performed, the processing unit 17 will thus output an alert if 21 (TV = 20) tightening operations result in conflicting tightening classes and accordingly are indicated to be incorrectly estimated.

It may be desirable to ensure that a number of conflicting tightening class estimations have been performed before an alert is provided rather than providing an instant alert as soon as an incorrect estimation is performed, since occasionally an estimation can be incorrect even if the trained ML model indeed is an adequate fit for the particular application. This is provided for by the introduction of a threshold value TV in step S202b.

It should be noted that step S202a is optional, and it may be envisaged that the number C of conflicts having occurred is evaluated regardless of whether or not a given number of sets of torque and angle values T, A has been evaluated. For instance, as soon as the number C of conflicts having occurred e.g. exceeds TV = 10, an alert is provided in step S203 (even if not 100 sets have been evaluated).

In a further embodiment, this also allows comparing a trained ML model to any previous version of the trained ML model. Should for instance a more current version of a trained ML model result in a poorer result over a number of tightening operations (e.g. 100 as in the example above), than that may indicate that the previous version should be used instead.

In embodiments, approaches utilized for training the ML model include neural networks, random forest-based classification, regression analysis, etc. An advantage of neural networks is their ability to learn to extract both temporal and spatial patterns from data sets.

The training of the ML model and the subsequent determining of tightening class for torque and angle values observed during a tightening program may be performed locally by the processing unit 17, or by the cloud server 30. The determined tightening class may be immediately communicated to the operator of the tool 10 via e.g. the display 14. As a consequence, the operator may unscrew the bolt 25 and perform a new tightening program in order to attain an adequate tightening.

It is envisaged that the steps S201-S203 of the method according to embodiments may be performed by the control device 20 arranged in the tool 10 itself. However, it may also be envisaged that torque and angel values are measured by the tool 10 and then communicated via transmitter 16 to the cloud server 30 being equipped with a corresponding control device 35 for performing the TC estimation and subsequently all steps S201-S203, which would relieve the processing unit 17 from the computational burden. The cloud server 30 may send information indicating that an alert as regards incorrect TC estimation should be provided to the tool 10, which presents an alert to the operator via the display 14 or audibly via a small speaker included with the tool 10.

If may further be envisaged that the tool 10 performs all steps S201-S203 and then alerts the cloud server 30 of the incorrect estimation of the tightening class (possibly along with alerting the operator), which may hold a database accordingly, or provides the alert e.g. to a supervision control room.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope being defined by the following claims.

## Claims

1. A method for determining correctness of tightening classes estimated by a trained multi-label machine learning, ML, model of a tightening operation performed by a tightening tool (10), the method being **characterized in** comprising:
acquiring (S201) at least two tightening classes estimated by the trained ML model in response to at least one set of observed torque and angle values being supplied to the ML model for a fastener (25) having been tightened by the tightening tool (10), the tightening class identifying a characteristic of the tightening having been applied to the fastener (25);
evaluating (S202) if there is a conflict between the acquired at least two tightening classes in terms of the characteristics of the tightening having been applied to the fastener (25); and if so:
providing (S203) an alert indicating that the estimation of at least one of said at least two tightening classes by the ML model is incorrect.

2. The method of claim 1, further comprising, if the evaluation indicates that the estimation of at least one of the acquired at least two tightening classes is correct:
providing (S204) an alert indicating that the estimation of at least one of said at least two tightening classes by the ML model is correct.

3. The method of any one of the preceding claims, wherein the alert indicating that the estimation of at least one of said at least two tightening classes by the ML model is incorrect is provided (S203) if a number of sets of observed torque and angle values for which the at least one estimated tightening class is evaluated to be incorrect is determined (S202b) to exceed a predetermined threshold value.

4. The method of claim 3, wherein the alert is provided if further a predetermined number of sets of observed torque and angle values is determined (S202a) to have been evaluated.

5. The method of claims 3 or 4, wherein a current version of the trained ML model is changed for a previous version of the trained ML model if the exceeding of the predetermined threshold value indicates that the previous version of the trained ML model performs better estimations.

6. The method of any one of the preceding claims, wherein the alert is provided to an operator of the tightening tool (10), to the tightening tool (10) itself, to a supervision control room or to a remote cloud function (30).

7. The method according to claim 6, wherein the tightening tool (10) provides an audible and/or visual alert to the operator of the tool (10).

8. The method of any one of the preceding claims, wherein the machine learning is based on one or more of neural networks, random forest-based classification and regression analysis.

9. The method of any one of the preceding claims, wherein the evaluating (S202) if there is a conflict between the acquired at least two tightening classes comprises determining that the acquired at least two tightening classes identify characteristics which are not expected to occur during the same tightening operation.

10. The method of any one of the preceding claims, wherein the evaluating (S202) if there is a conflict between the acquired at least two tightening classes comprises determining that one or more expected further tightening classes are absent for the acquired at least two tightening classes.

11. The method of any one of the preceding claims, wherein the evaluating (S202) if there is a conflict between the acquired at least two tightening classes comprises determining that at least one tightening class was absent for a training data set utilized for training the ML model.

12. A computer program (18, 33) comprising computer-executable instructions for causing the device (20, 35) of claim 14 to perform the method recited in any one of claims 1-11 when the computer-executable instructions are executed on a processing unit (17, 32) included in the device (20, 35).

13. A computer program product comprising a computer readable medium (19, 34), the computer readable medium having the computer program (18, 33) according to claim 12 embodied thereon.

14. A device (20, 35) configured to determine correctness of tightening classes estimated by a trained multi-label machine learning, ML, model of a tightening operation performed by a tightening tool (10), the device (20, 35) comprising a processing unit (17, 32) **characterized in** being operative to cause the device (20, 35) to:
acquire (S201) at least two tightening classes estimated by the trained ML model in response to at least one set of observed torque and angle values being supplied to the ML model for a fastener (25) having been tightened by the tightening tool (10), the tightening class identifying a characteristic of the tightening having been applied to the fastener (25);
evaluate (S202) if there is a conflict between the acquired at least two tightening classes in terms of the characteristics of the tightening having been applied to the fastener (25); and if so:
provide (S203) an alert indicating that the estimation of at least one of said at least two tightening classes by the ML model is incorrect.

## Patentansprüche

1. Verfahren zum Bestimmen einer Korrektheit von Anziehklassen, die durch ein trainiertes Multi-Label-Maschinenlernmodell, ML-Modell, geschätzt werden, eines Anziehvorgangs, der durch ein Anziehwerkzeug (10) durchgeführt wird, wobei das Verfahren **dadurch gekennzeichnet ist, dass** es umfasst:
Erfassen (S201) von mindestens zwei Anziehklassen, die durch das trainierte ML-Modell als Reaktion auf mindestens einen Satz beobachteter Drehmoment- und Winkelwerte geschätzt werden, die dem ML-Modell für ein Befestigungselement (25), das durch das Anziehwerkzeug (10) angezogen wurde, zugeführt werden, wobei die Anziehklasse eine Eigenschaft des Anziehens, das auf das Befestigungselement (25) angewendet wurde, identifiziert;
Bewerten (S202), ob zwischen den erfassten mindestens zwei Anziehklassen hinsichtlich der Eigenschaften des Anziehens, das auf das Befestigungselement (25) angewendet wurde, ein Konflikt besteht; und falls ja:
Bereitstellen (S203) einer Warnung, die angibt, dass die Schätzung mindestens einer der mindestens zwei Anziehklassen durch das ML-Modell inkorrekt ist.

2. Verfahren nach Anspruch 1, ferner umfassend, falls die Bewertung angibt, dass die Schätzung mindestens einer der erfassten mindestens zwei Anziehklassen korrekt ist:
Bereitstellen (S204) einer Warnung, die angibt, dass die Schätzung mindestens einer der mindestens zwei Anziehklassen durch das ML-Modell korrekt ist.

3. Verfahren nach einem der vorstehenden Ansprüche, wobei die Warnung, die angibt, dass die Schätzung mindestens einer der mindestens zwei Anziehklassen durch das ML-Modell inkorrekt ist, bereitgestellt wird (S203), falls bestimmt wird (S202b), dass eine Anzahl von Sätzen beobachteter Drehmoment- und Winkelwerte, für die die mindestens eine geschätzte Anziehklasse als inkorrekt bewertet wird, einen zuvor bestimmten Schwellenwert überschreitet.

4. Verfahren nach Anspruch 3, wobei die Warnung bereitgestellt wird, falls ferner bestimmt wird (S202a), dass eine zuvor bestimmte Anzahl von Sätzen beobachteter Drehmoment- und Winkelwerte bewertet wurde.

5. Verfahren nach Anspruch 3 oder 4, wobei eine aktuelle Version des trainierten ML-Modells gegen eine vorherige Version des trainierten ML-Modells ausgetauscht wird, falls das Überschreiten des zuvor bestimmten Schwellenwerts angibt, dass die vorherige Version des trainierten ML-Modells bessere Schätzungen durchführt.

6. Verfahren nach einem der vorstehenden Ansprüche, wobei die Warnung an einen Bediener des Anziehwerkzeugs (10), an das Anziehwerkzeug (10) selbst, an einen Überwachungskontrollraum oder an eine Remote-Cloud-Funktion (30) bereitgestellt wird.

7. Verfahren nach Anspruch 6, wobei das Anziehwerkzeug (10) eine akustische und/oder optische Warnung an den Bediener des Werkzeugs (10) bereitstellt.

8. Verfahren nach einem der vorstehenden Ansprüche, wobei das Maschinenlernen auf einem oder mehreren von neuronalen Netzwerken, Random-Forest-basierter Klassifizierung und Regressionsanalyse basiert.

9. Verfahren nach einem der vorstehenden Ansprüche, wobei das Bewerten (S202), ob ein Konflikt zwischen den erfassten mindestens zwei Anziehklassen besteht, das Bestimmen umfasst, dass die erfassten mindestens zwei Anziehklassen Eigenschaften identifizieren, für die nicht erwartet wird, dass sie während desselben Anziehvorgangs auftreten.

10. Verfahren nach einem der vorstehenden Ansprüche, wobei das Bewerten (S202), ob ein Konflikt zwischen den erfassten mindestens zwei Anziehklassen besteht, das Bestimmen umfasst, dass eine oder mehrere erwartete weitere Anziehklassen für die erfassten mindestens zwei Anziehklassen fehlen.

11. Verfahren nach einem der vorstehenden Ansprüche, wobei das Bewerten (S202), ob ein Konflikt zwischen den erfassten mindestens zwei Anziehklassen besteht, das Bestimmen umfasst, dass mindestens eine Anziehklasse für einen Trainingsdatensatz, der zum Trainieren des ML-Modells verwendet wurde, fehlte.

12. Computerprogramm (18, 33), umfassend computerausführbare Anweisungen zum Veranlassen der Vorrichtung (20, 35) nach Anspruch 14, das Verfahren, das in einem der Ansprüche 1 bis 11 aufgeführt ist, durchzuführen, wenn die computerausführbaren Anweisungen auf einer Verarbeitungseinheit (17, 32), die in der Vorrichtung (20, 35) eingeschlossen ist, ausgeführt werden.

13. Computerprogrammprodukt, umfassend ein computerlesbares Medium (19, 34), wobei das computerlesbare Medium das Computerprogramm (18, 33) nach Anspruch 12 darauf verkörpert aufweist.

14. Vorrichtung (20, 35), die konfiguriert ist, um die Korrektheit von Anziehklassen, die durch ein trainiertes Multi-Label-Maschinenlernmodell, ML-Modell, geschätzt werden, eines Anziehvorgangs, der durch ein Anziehwerkzeug (10) durchgeführt wird, zu bestimmen, die Vorrichtung (20, 35) umfassend eine Verarbeitungseinheit (17, 32), die **dadurch gekennzeichnet ist, dass** sie betriebsfähig ist, um die Vorrichtung (20, 35) zu veranlassen zum:
Erfassen (S201) von mindestens zwei Anziehklassen, die durch das trainierte ML-Modell als Reaktion auf mindestens einen Satz beobachteter Drehmoment- und Winkelwerte geschätzt werden, die dem ML-Modell für ein Befestigungselement (25), das durch das Anziehwerkzeug (10) angezogen wurde, zugeführt werden, wobei die Anziehklasse eine Eigenschaft des Anziehens, das auf das Befestigungselement (25) angewendet wurde, identifiziert;
Bewerten (S202), ob zwischen den erfassten mindestens zwei Anziehklassen ein Konflikt hinsichtlich der Eigenschaften des Anziehens, das auf das Befestigungselement (25) angewendet wurde, besteht; und falls ja:
Bereitstellen (S203) einer Warnung, die angibt, dass die Schätzung mindestens einer der mindestens zwei Anziehklassen durch das ML-Modell inkorrekt ist.

## Revendications

1. Procédé permettant la détermination de l'exactitude de classes de serrage estimées par un modèle d'apprentissage automatique, ML, multi-label entraîné d'une opération de serrage effectuée par un outil de serrage (10), le procédé étant **caractérisé en ce qu'il** comprend :
l'acquisition (S201) d'au moins deux classes de serrage estimées par le modèle ML entraîné en réponse à au moins un ensemble de valeurs de couple et d'angle observées fournies au modèle ML pour un élément de fixation (25) ayant été serré par l'outil de serrage (10), la classe de serrage identifiant une caractéristique du serrage ayant été appliqué à l'élément de fixation (25) ;
le fait d'évaluer (S202) s'il existe un conflit entre les au moins deux classes de serrage acquises en termes de caractéristiques du serrage ayant été appliquées à l'élément de fixation (25) ; et si tel est le cas :
la fourniture (S203) d'une alerte indiquant que l'estimation d'au moins l'une desdites au moins deux classes de serrage par le modèle ML est incorrecte.

2. Procédé selon la revendication 1, comprenant en outre, si l'évaluation indique que l'estimation d'au moins l'une des deux classes de serrage acquises est correcte :
la fourniture (S204) d'une alerte indiquant que l'estimation d'au moins l'une desdites au moins deux classes de serrage par le modèle ML est correcte.

3. Procédé selon l'une quelconque des revendications précédentes, dans lequel l'alerte indiquant que l'estimation d'au moins l'une desdites au moins deux classes de serrage par le modèle ML est incorrecte est fournie (S203) si un nombre d'ensembles de valeurs de couple et d'angle observées pour lesquelles l'au moins une classe de serrage estimée est évaluée comme étant incorrecte est déterminé (S202b) comme étant supérieur à une valeur seuil prédéterminée.

4. Procédé selon la revendication 3, dans lequel l'alerte est fournie si, en outre, un nombre prédéterminé d'ensembles de valeurs de couple et d'angle observées est déterminé (S202a) comme ayant été évalué.

5. Procédé selon les revendications 3 ou 4, dans lequel une version actuelle du modèle ML entraîné est remplacée par une version précédente du modèle ML entraîné si le dépassement de la valeur seuil prédéterminée indique que la version précédente du modèle ML entraîné réalise de meilleures estimations.

6. Procédé selon l'une quelconque des revendications précédentes, dans lequel l'alerte est fournie à un opérateur de l'outil de serrage (10), à l'outil de serrage (10) lui-même, à une salle de contrôle de supervision ou à une fonction nuage à distance (30).

7. Procédé selon la revendication 6, dans lequel l'outil de serrage (10) fournit une alerte audible et/ou visuelle à l'opérateur de l'outil (10).

8. Procédé selon l'une quelconque des revendications précédentes, dans lequel l'apprentissage machine est sur la base d'un ou plusieurs réseaux de neurones, une classification basée sur une forêt aléatoire et une analyse de régression.

9. Procédé selon l'une quelconque des revendications précédentes, dans lequel l'évaluation (S202) de l'existence d'un conflit entre les au moins deux classes de serrage acquises comprend la détermination selon laquelle les au moins deux classes de serrage acquises identifient des caractéristiques qui ne sont pas censées se produire au cours de la même opération de serrage.

10. Procédé selon l'une quelconque des revendications précédentes, dans lequel l'évaluation (S202) de l'existence d'un conflit entre les au moins deux classes de serrage acquises comprend la détermination selon laquelle une ou plusieurs autres classes de serrage attendues sont absentes pour les au moins deux classes de serrage acquises.

11. Procédé selon l'une quelconque des revendications précédentes, dans lequel l'évaluation (S202) de l'existence d'un conflit entre les au moins deux classes de serrage acquises comprend la détermination selon laquelle au moins une classe de serrage était absente pour un ensemble de données d'entraînement utilisé pour l'entraînement du modèle ML.

12. Programme informatique (18, 33) comprenant des instructions exécutables par ordinateur et destinées à amener le dispositif (20, 35) selon la revendication 14 à effectuer le procédé selon l'une quelconque des revendications 1 à 11 lorsque les instructions exécutables par ordinateur sont exécutées sur une unité de traitement (17, 32) incluse dans le dispositif (20, 35).

13. Produit-programme informatique comprenant un support lisible par ordinateur (19, 34), le support lisible par ordinateur ayant le programme informatique (18, 33) selon la revendication 12 intégré à celui-ci.

14. Dispositif (20, 35) configuré pour déterminer l'exactitude des classes de serrage estimées par un modèle d'apprentissage automatique, ML, multi-label d'une opération de serrage effectuée par un outil de serrage (10), le dispositif (20, 35) comprenant une unité de traitement (17, 32) **caractérisé en ce qu'**il est opérationnel pour amener le dispositif (20, 35) à :
acquérir (S201) au moins deux classes de serrage estimées par le modèle ML entraîné en réponse à au moins un ensemble de valeurs de couple et d'angle observées fournies au modèle ML pour un élément de fixation (25) ayant été serré par l'outil de serrage (10), la classe de serrage identifiant une caractéristique du serrage ayant été appliqué à l'élément de fixation (25) ;
évaluer (S202) s'il existe un conflit entre les au moins deux classes de serrage acquises en termes de caractéristiques du serrage ayant été appliquées à l'élément de fixation (25) ; et si tel est le cas :
fournir (S203) une alerte indiquant que l'estimation d'au moins l'une desdites au moins deux classes de serrage par le modèle ML est incorrecte.
